# EUROPEAN PATENT APPLICATION

(11) **EP 1 039 720 A2**
(43) Date of publication of application: **27.09.2000**
(21) Application number: 00300996.6
(22) Date of filing: 09.02.2000
(51) Int. Cl.: H04L 29/06, G06F 17/60

(54) **Service provision system and method**

(30) Priority: 19.03.1999 JP 7500399
(71) Applicant: Hitachi, Ltd., Chiyoda-ku, Tokyo 101-8010 (JP)
(72) Inventor: Hirai, Katsunori, No. 316 Roiyaruhiruzu-Higashi, Yokohama-shi, Kanagawa-ken 244-0801 (JP); Mineo, Akira, Kanagawa-ken 229-1103 (JP)
(74) Representative: Hackney, Nigel John

(57) **Abstract**

There has been a problem in that, when a service provisioning system such as a shopping service system is highly loaded, since all users are unconditionally limited in the access to the service provisioning system, service provisioning conditions cannot be set on a user-by-user basis so that specific users are preferentially connected to the service provisioning system and other users are not. There are provided an actual using result table to store purchase amounts in the shopping system and an operation threshold value table to store load thresholds used as criteria for determining whether to approve service provisioning, and when a request for an access to the service provisioning system is received, the actual using result table and the operation threshold value table are referred to, a load threshold is determined based on an actual using result, and it is determined whether to approve an access to the service provisioning system.

## Description

The present invention relates to a technique for controlling the regulation of service provisioning to specific users in an information communication service system.

In prior art information communication service systems, as described in Japanese Unexamined Patent Publication No. H 10-97476, the load of a network has been reduced by controlling server-provisioned service in units of service types to prevent the network from being overloaded.
Also, as described in Japanese Unexamined Patent Publication No. H 6-284187, the load of a server has been reduced by controlling service in units of clients to prevent the server from being overloaded.

A prior art system as described in Japanese Unexamined Patent Publication No. H 10-97476 has a problem in that, when an information communication service system is highly loaded, since all users are unconditionally controlled in service provisioning, service provisioning cannot be controlled in units of users so that specific users are preferentially connected to a service provisioning system and the access of other users is controlled. A prior art system as described in Japanese Unexamined Patent Publication No. H 6-284187 has a problem in that, when an information communication service system is highly loaded, since clients subject to service control are predetermined, service control based on the actual using result of service users cannot be performed so that service is preferentially provisioned to users having many actual using results and service provisioning to other users is controlled.

For example, in a shopping service system, access to the system tends to concentrate on a specific time zone. During such access concentration, since all users are unconditionally controlled in the access to the shopping service system without differentiating between service users to only view goods and those to purchase goods, there is a problem in that the service users to purchase goods cannot be connected to the shopping service system. There is a problem in that a high-load state decreases sales of the shopping service system, since service users (good customers) who have many actual using results and are expected to purchase goods, and service users to contribute to sales cannot be connected, or cannot use service in a short response time.

Preferably, an object of the present invention is to provide an information communication service system that, when it is highly loaded, prevents it from being overloaded by selectively connecting service users to a service provisioning system based on the actual using result of the service users, and preferentially connects specific service users to the service provisioning system.

In a first aspect, a service request receiving part is provided which determines whether to access service users to the service provisioning system according to the load state of the service provisioning part for each service user, based on the actual service using result (purchase quantity, purchase amounts, purchase count, service provisioning count, access count, etc.) of the service user.

In order that the threshold value of each user is obtained according to a change of actual service using results without a service operator having to define a service threshold value for each user, a threshold value determining part is provided which obtains a threshold value used in the service request receiving part from actual service using results.

### BRIEF DESCRIPTION OF THE DRAWINGS

Fig. 1 is a block diagram of a shopping service system showing an embodiment of the present invention.
Fig. 2 is an example of an actual using result table used in a threshold value determining part.
Fig. 3 is an example of an operation threshold value table used in the threshold value determining part.
Fig. 4 is an example of the operation threshold value table used in the threshold value determining part.
Fig. 5 is an example of a user threshold value table used in the threshold value determining part.
Fig. 6 is a flowchart showing processing of the service request receiving part.
Fig. 7 is a flowchart showing processing of the threshold value determining part.
Fig. 8 is a flowchart showing processing of the threshold value determining part.
Fig. 9 is a flowchart showing updating of the user threshold value table of the threshold value determining part.
Fig. 10 is a flowchart showing the updating of the user threshold value table of the threshold value determining part.
Fig. 11 is a flowchart showing processing of a query about a load threshold from the service request receiving part of the threshold value determining part.

### DETAILED DESCRIPTION OF AN EMBODIMENT

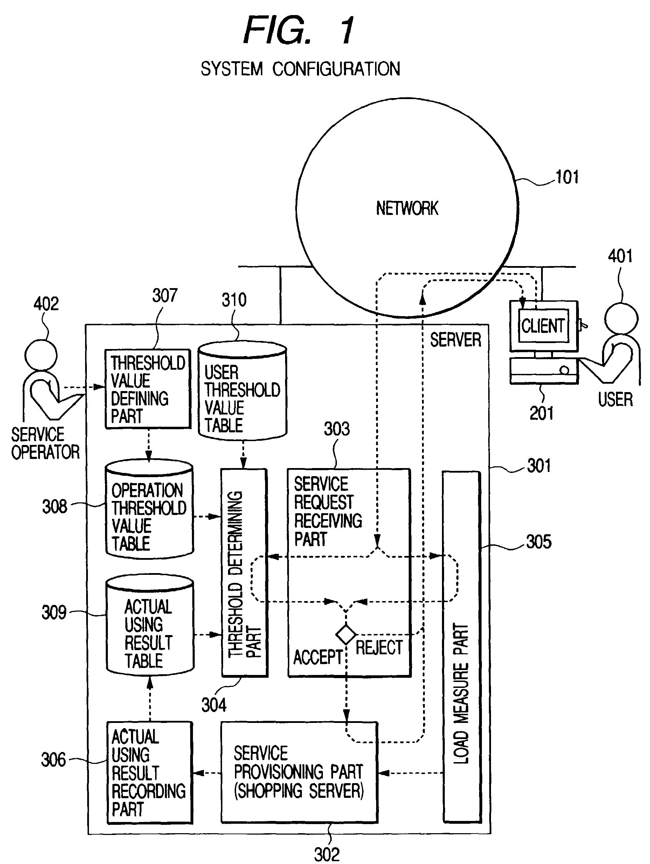

Hereinafter, an embodiment of the present invention will be described using an example of a shopping service system with reference to Figs. 1 to 11.

Fig. 1 shows an overall configuration of the shopping service system. The system comprises: a service provisioning part 302 for provisioning shopping service; a load measure part 305 for measuring the load of the service provisioning part 302; an actual using result table 309 for recording the actual using results of the service provisioning part 302 by service users; an actual using result recording part 306 for updating the actual using result table 309 each time service users use the service provisioning part 302; an operation threshold value table 308 for storing load thresholds used as criteria values for determining whether to approve an access to the system in accordance with the load of the service provisioning part 302; a threshold value determining part 304 for obtaining the load threshold of each service user from the actual using result table 309 and the operation threshold value table 308; and a service request receiving part 303 for determining whether to accept a request of a service user for an access to the service provisioning system in accordance with the load threshold obtained in the threshold value determining part 304 and the load of the service provisioning part 302, obtained in the load measure part 305.

Actual using results stored in the actual using result table 309 designate the results of service used by service users such as the total of used amounts during a given term of service, a service using count, a term after subscription to service, and the history of using specific service.

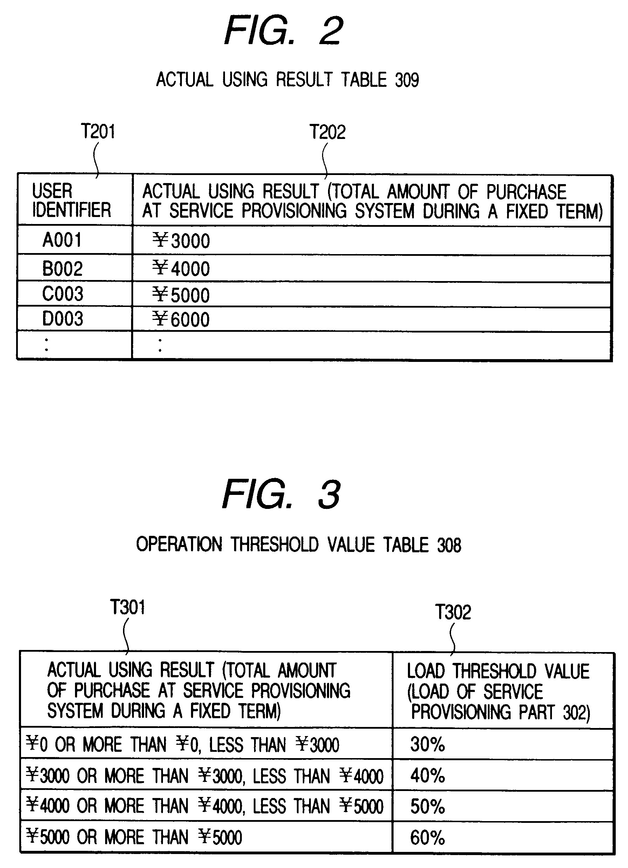

The shopping service system shown in Fig. 1, as the actual using result table, uses a table of correspondences between user identifiers T201 and total amounts T202 of purchase in shopping service, as shown in Fig. 2.

Although, in this embodiment, actual using result T201 of the actual using result table 309 is updated by the actual using result recording part 306 each time the service provisioning part 302 is used by a service user 401, actual using results during a fixed term may be collectively updated.

Herein, the load of the service provisioning part designates the utilization status of resources used in service provisioned to service users by the service provisioning part, such as a processor busy ratio, memory or buffer utilization ratio, disk space utilization ratio, and I/O ratio of a network or disks. Although the shopping service system illustrated in Fig. 1 uses a processor utilization ratio of the shopping service part 302 as the load of the service provisioning part, which may be whatever kind of load exerts influence on service quality, such as the I/O ratio of the network and disks.

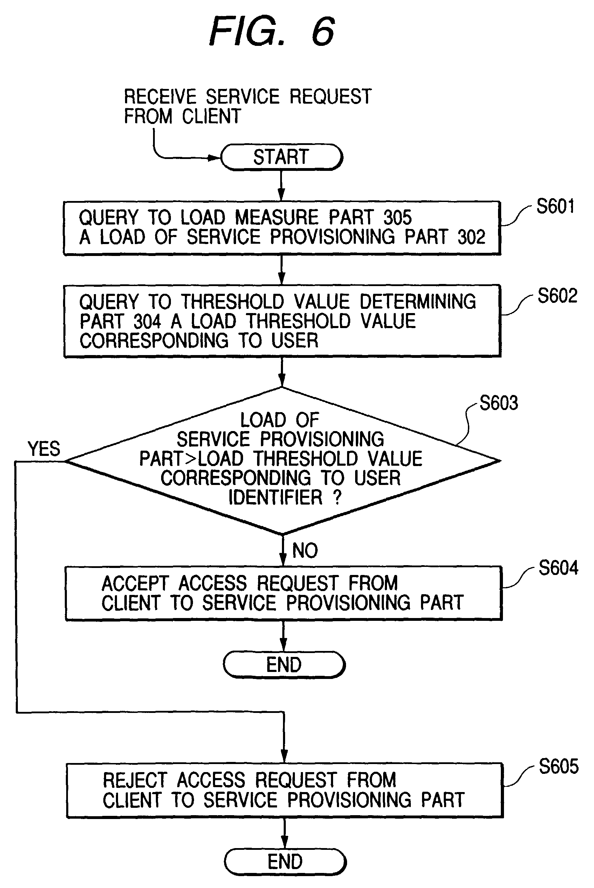

Upon receipt of a request from a service user for an access to the service provisioning system, the service request receiving part 303 determines whether to accept the request. This processing is shown in Fig. 6. The steps of the processing will be described below. The service request receiving part 303 queries the load measure part 305 about a load of the service provisioning part (S601), queries the threshold value determining part 304 about a load threshold of the service user who made the access request (S602), compares the load of the service provisioning part and the load threshold of the service user (S603), if the load of the service provisioning part does not exceed the load threshold of the service user, accepts the request for an access to the service provisioning system (S604), and otherwise rejects an access to the service provisioning system (S605).

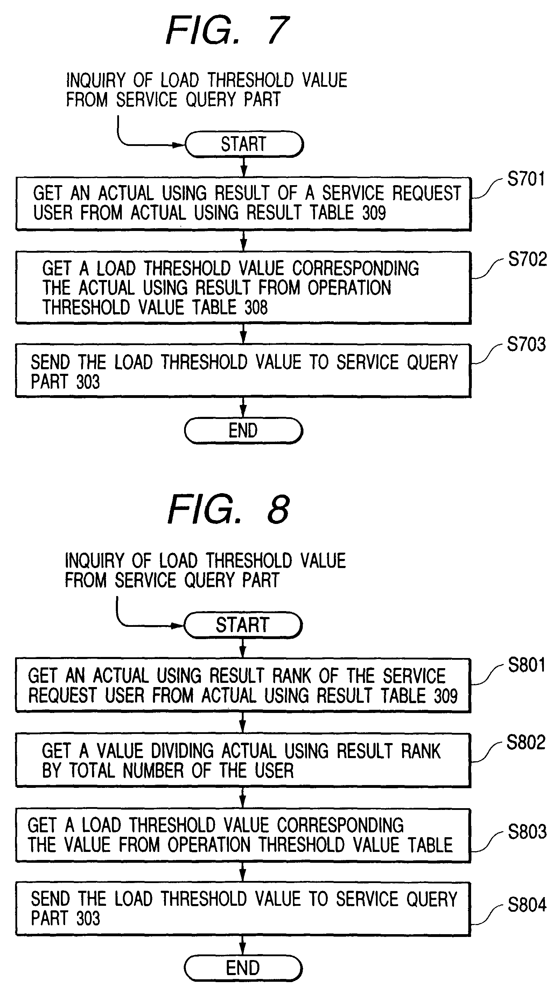

Upon receipt of a query about a load threshold from the service request receiving part 303, the threshold value determining part 304 refers to the actual using result table 309 and the operation threshold value table 308 and returns the load threshold of the service user to the service request receiving part 303. This processing is shown in Fig. 7. The steps of the processing will be described below. The actual using result table and the operation threshold value table 308 referred to in the processing are shown in Figs. 2 and 3, respectively. As the operation threshold value table, as shown in Fig. 3, a table of correspondences between total amounts T301 of purchase in shopping service and load thresholds T302 of the shopping service part 302 is used. Fig. 7 is used to describe processing of the threshold value determining part 304 for the query about the load threshold from the service request receiving part 303. The threshold value determining part 304 uses, as a key, a user identifier from the service request receiving part 303 to refer to the user identifier field T201 of the actual using result table 309, and obtains the actual using result of the service request user from the actual using result field T202 of the actual using result table 309 (S701), uses the obtained actual using result as a key to refer to the actual using result field T301 of the operation threshold value table 308 and obtains a corresponding load threshold from the load threshold field T302 of the operation threshold value table 308 (S702), and passes the obtained load threshold of the service user to the service request receiving part 303 (S703). In this way, by using the actual using result table 309 and the operation threshold value table 308, the load threshold of each user can be obtained based on the total amounts of purchase in shopping service, which indicate the actual using result of service users during a past fixed term. By comparing the load thresholds with the load of the service provisioning part, whether to approve an access to the service provisioning system can be determined for each user. A threshold value defining part 307 serves as a means for updating the operation threshold value table 308, and a service operator 402 can change criteria for approving an access to the system by changing the correspondence between the field T301 of the total amounts of purchase in shopping service and the field T302 of loads of the shopping service part 302 in the operation threshold value table 308.

In the shopping service system previously described, the operation threshold value table 308 may be replaced by a table of correspondences between values obtained by dividing actual using result ranks determined from actual using results by the number of all users and load thresholds.

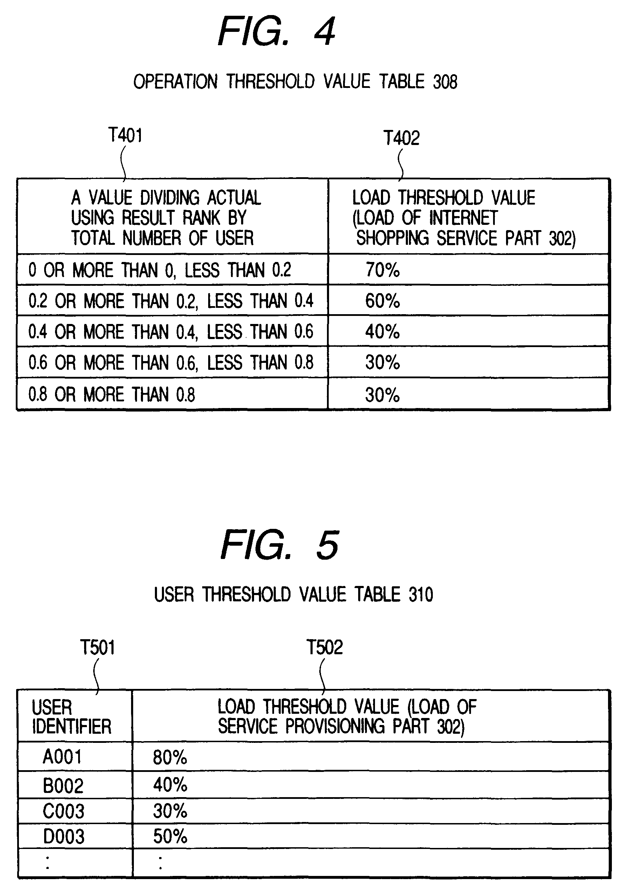

As the operation threshold value table, as shown in Fig. 4, a table of correspondences between values T401 obtained by dividing actual using result ranks by the number of all users and loads T402 of the shopping service part 302 is used.

Upon receipt of a query about a load threshold from the service request receiving part 303, the threshold value determining part 304 refers to the actual using result table 309 and the operation threshold value table 308 and returns the load threshold of the service user to the service request receiving part 303. This processing is shown in Fig. 8. The steps of the processing will be described below. The actual using result table and the operation threshold value table 308 referred to in the processing are shown in Figs. 2 and 4, respectively. The threshold value determining part 304 refers to the actual using result table 309 to obtain an actual using result rank of the service user in an ascending order of service use amounts indicating the actual using result (S801), gets a value obtained by dividing the obtained actual using result rank by the number of all users (S802), obtains a load threshold corresponding to the obtained value from the operation threshold value table 308 (S803), and returns the obtained load threshold of the service user to the service request receiving part 303 (S804).

In this way, by using the actual using result table 309 and the operation threshold value table 308, the load threshold of each user can be obtained based on a value obtained by dividing the actual using result rank of the service user by the number of all users. By comparing the load thresholds with the load of the service provisioning part, whether to approve an access to the service provisioning system can be determined for each user. The threshold value defining part 307 serves as a means for updating the operation threshold value table 308, and the service operator 402 can change criteria for approving an access to the system by changing the correspondence between the field T401 of values obtained by dividing actual using result ranks by the number of all users and the load field T402 of the shopping service part 302 in the operation threshold value table 308.

In the shopping service system previously described, an alternative method may be employed which does not refer to the actual using result table 309 and the operation threshold value table 308 each time a query about a load threshold from the service request receiving part 303 is received; that is, by in advance creating a user threshold value table 310, when a query about a load threshold from the service request receiving part 303 is received, only the user threshold value table 310 is referred to so that a load threshold of a service user is returned to the service request receiving part 303.

The user threshold value table 310 is shown in Fig. 5. The user threshold value table 310 is a table of correspondences between user identifiers T501 and loads T502 of the service provisioning part.

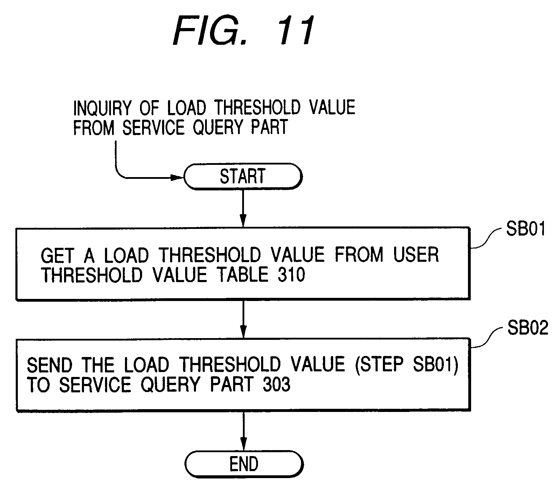

Upon receipt of a query about a load threshold from the service request receiving part 303, the threshold value determining part 304 refers to the user threshold value table 310 and returns the load threshold of a service user to the service request receiving part 303. This processing is shown in Fig. 11. The steps of the processing will be described below.

The threshold value determining part 304 uses, as a key, the user identifier of a user whose load threshold is queried from the service request receiving part 303 to refer to the user identifier field T501 of the user threshold value table 310 and obtains the load threshold of the service request user by referring to the load threshold T502 of the user threshold value table 310 (SB01), and returns the obtained load threshold of the service user to the service request receiving part 303 (SB02).

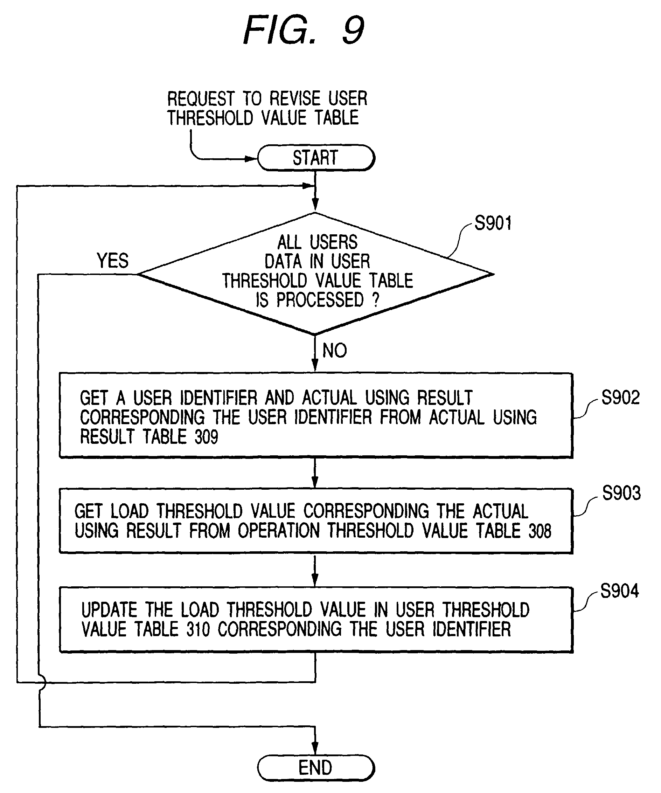

The user threshold value table 310 is in advance created. This processing is shown in Fig. 9. The steps of the processing will be described below.

The threshold value determining part 304 repeats processing described below for all service users contained in the actual using result table 309. The threshold value determining part 304 refers to the actual using result table 309 and fetches one service user and the actual using result (S902), obtains a load threshold corresponding to the obtained actual using result by referring to the operation threshold value table 308 (S903), and updates the load threshold of the user threshold value table 310 corresponding to the obtained service user by the obtained load threshold (S904).

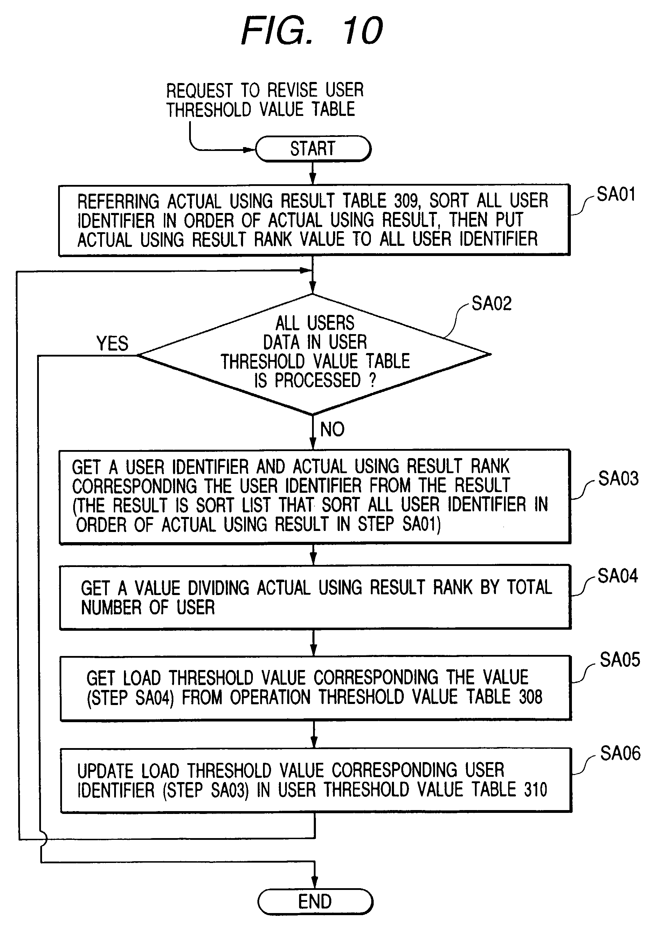

In the shopping service system previously described, the user threshold value table 310 may have been in advance created. Processing for creating the user threshold value table 310 in this case is shown in Fig. 10. The steps of the processing will be described below.

The threshold value determining part 304 refers to the actual using result table 309, sorts all users by actual using result, and assigns an actual using result rank to all users (SA01). The threshold value determining part 304 repeats processing described below for all service users contained in the actual using result table 309 (SA02). The threshold value determining part 304 obtains a service user and an actual using result rank corresponding to the service user from the result sorted by actual using result (SA03); obtains a value obtained by dividing the obtained actual using result rank by the number of all users (SA04); obtains a load threshold corresponding to the obtained value from the operation threshold value table 308 (SA05); and updates a load threshold of the user threshold value table 310 corresponding to the obtained user by the obtained load threshold (SA06).

Plural methods have been described as methods for determining whether to approve an access when a request for an access to the service provisioning system is made from a user. These methods may be selected in a service provisioning system, as required, depending on the type of service concerned, service provisioning timing, and the group to which a requesting user belongs.

The method to determine whether to access a user to the service provisioning system is described in the foregoing explanation. It may be possible to change communication bandwidth allocation when the user access to the service provisioning system depending on the user actual using result instead of the above method. The changing method of the bandwidth allocation is changing window size of TCP/IP, changing ACK delay time, bandwidth control of RSVP protocol etc..

According to the present invention, during access concentration in a shopping service system, service users are selected based on the actual using result of the service users such as purchase amounts so that service can be preferentially provisioned to good customers expected to purchase service. When the system is highly loaded, service users are dominated by good customers and customers to contribute to system's sales, with the result that the sales efficiency of the shopping service system can be improved.

The present invention, when a service provisioning system is highly loaded, approves connecting service users from whom service provisioning is highly expected, to the service provisioning system, based on actual service provisioning results, and can selectively provision service.

## Claims

1. A service provisioning system which provisions service by using a computer to meet requests from plural users, comprising:
a storage unit which stores information about users' actual using results on said service; and
a service request receive means determines whether to access a user to said service provisioning system, based on said actual using result of the user, when an access request is made from said user.

2. A service provisioning system which provisions service by using a computer to meet requests from plural users, comprising:
a storage unit which stores information about users actual using results on said service; and
a service request receive means determines the bandwidth to access a user to said service provisioning system, based on said actual using result of the user, when a access request is made from said user.

3. A service provisioning system according to claim 1, wherein said storage unit stores:
an operation threshold value table which stores criteria for determining whether to access said user to said service provisioning system, based on said actual using result of said user in said service provisioning system; and
an actual using result table which stores said actual using result of said user.

4. A service provisioning system according to claim 3, wherein said actual using result table stores information about purchase amounts during a fixed term, corresponding to user identifiers.

5. A service provisioning system according to claim 4, wherein said threshold value table stores information defining a relationship between purchase amounts of the users during a fixed term, stored in said actual using result table and loads of said service provisioning system to allow an access of the user to said service provisioning system.

6. A service provisioning system according to claim 4, wherein said threshold value table stores information defining a relationship between actual using result ranks calculated from purchase amounts of the user during a fixed term, stored in the actual using result table and said loads of said service provisioning system to allow the access of the user to the service provisioning system.

7. A service provisioning system according to claim 3, further comprising the users threshold value table which defines criteria for approving an access to the service provisioning system for each user.

8. A service provisioning system according to claim 7, wherein the criteria defined in said users threshold value table are information giving correspondences between user identifiers and information about the loads of said service provisioning system to allow the access of said user to said service provisioning system.

9. A service provisioning system according to claim 1, wherein the service request receive means for determining whether to access said users to said service provisioning system, as a criterion of determination, switches between two methods: one method uses the operation threshold value table storing criteria for determining, based on information about the actual using result of said user in said service provisioning system, whether to access said user to said service provisioning system, and the actual using result table storing the actual using result of said user; and another method uses the user threshold value table defining, for each user, criteria for approving the access to said service provisioning system.

10. A service provisioning system according to claim 1, wherein, as information about the actual using result of said user, at least one of quantity of service purchase, amounts of service purchase, and the number of service purchases in said service provisioning system is used.

11. A service provisioning method which provisions service to meet a request from plural users, comprising the steps of:
receiving an access request from a user;
referring to information about the actual using result of said user in the service provisioning system; and
determining whether to access said user to the service provisioning system, based on the information about said actual using result.

12. A service provisioning method according to claim 11, comprising the steps of:
reading the actual using result of said user from the actual using result table in which information about the actual using result of said user is stored;
comparing the obtained actual using result with a value of the operation threshold value table storing criteria for whether to access to the user to the service provisioning system; and
determining whether to access said user to the service provisioning system.

13. A service provisioning method according to claim 12, comprising a step of obtaining the actual using result of said user by reading information about purchase amounts during a fixed term, corresponding to the user identifiers, from said actual using result table.

14. A service provisioning method according to claim 13, wherein the comparison with said operation threshold value table comprises the steps of:
reading purchase amounts during a fixed term, of the user approved for an access under a current load of the service provisioning system; and
comparing the purchase amounts of said user during a fixed term and the purchase amounts during a fixed term, of the user approved for an access.

15. A service provisioning method according to claim 13, wherein the comparison with said operation threshold value table comprises the steps of:
reading an actual using result rank of the user approved for an access under the current load of the service provisioning system; and
comparing the actual using result rank calculated from the purchase amounts of said user during a fixed term and the actual using result rank of said user approved for an access.

16. A service provisioning method according to claim 12, wherein the comparison with said operation threshold value is made using criteria defined for each user in said user threshold value table.

17. A service provisioning method according to claim 16, wherein said criteria are information giving correspondences between user identifiers and information about the loads of said service provisioning system to allow the access of said user to said service provisioning system.

18. A service provisioning method according to claim 11, wherein whether to access said user to said service provisioning system is determined by switching between two methods: one method uses the operation threshold value table storing criteria for determining, based on information about the actual using result of said user in said service provisioning system, whether to access said user to said service provisioning system, and the actual using result table storing the actual using result of said user; and another method uses the user threshold value table defining, for each user, criteria for approving an access to said service provisioning system.

19. A service provisioning method according to claim 11, wherein, as the actual using result of said user, at least one of quantity of service purchase, amounts of service purchase, the number of service purchases, and a service purchase rank of users in said service provisioning system is used.

20. A computer-readable recording medium for storing a program to implement the method according to claim 11.

21. A computer-readable recording medium for storing a program to implement the method according to claim 12.
